# EUROPEAN PATENT SPECIFICATION

(11) **EP 1 866 177 B1**
(45) Date of publication and mention of the grant of the patent: **31.03.2010**
(21) Application number: 06727544.6
(22) Date of filing: 04.04.2006
(51) Int. Cl.: B60J 10/00, B60J 10/04, B60J 10/08

(54) **SEALING OR GUIDING ASSEMBLIES FOR WINDOWS AND MOUNTING METHOD**
DICHTUNGS- ODER FÜHRUNGSANORDNUNGEN FÜR FENSTER UND MONTAGEVERFAHREN
SYSTÈMES D'ÉTANCHÉIFICATION OU DE GUIDAGE POUR FENETRES ET PROCÉDÉ DE MONTAGE

(30) Priority: 04.04.2005 GB 0506821; 11.04.2005 GB 0507295; 19.09.2005 GB 0519168
(43) Date of publication of application: 19.12.2007
(73) Proprietor: Henniges Automotive Sealing Systems North America, Inc., Dover, DE 19901 (US)
(72) Inventor: HELLER, Norbert, 41749 Viersen (DE)
(74) Representative: Foster, Mark Charles
(86) International application number: PCT/IB2006/001024
(87) International publication number: WO 2006/106433

(56) References cited:
- WO-A-2004/030965
- WO-A-2004/050408
- WO-A-2006/046133
- DE-A1- 4 018 745
- DE-A1- 10 207 682

## Description

The invention relates to sealing or guiding assemblies. Embodiments of the invention, to be described in more detail below, are window sealing and guiding strip assemblies for use in motor vehicle body construction and, in particular, for use in window frames forming the upper part of vehicle doors, the sealing or guiding strip assembly being attached to the window frame and supporting the edge of a window pane which can be raised from and lowered into the lower part of the door. However, the invention is not restricted to such applications.

WO-A-2004/030965 and WO-A-2004/050408 disclose sealing or guiding strips that include a protruding formation for engaging an aperture in a frame to fix the sealing or guiding strip to the frame. The protruding formations are located in the middle portion of the strip. At the distal end of the strip a hook type portion grasps the end of the frame and is visible when the sealing or guiding assembly is in normal use. These documents do not disclose a hook-shaped portion at the proximal end of the strip configured for interlocking engagement with a recess in the frame. These documents do also not disclose the sealing or guiding strip including a first lip having a generally planar base extending from the proximal end of the strip and a second lip spaced from the first lip and having a generally planar base extending from approximately mid-way along the base of the first lip to a distal edge of the second lip. Further, these documents do not disclose a protruding formation opposite the second lip at a distal end of the strip for insertion through an aperture of the frame.

According to the present invention, there is provided a sealing or guiding assembly as defined in claim 1.

For a better understanding of the invention, window sealing and guiding strips embodying the invention and methods of making such strips will now be described, by way of example only, with reference to the accompanying diagrammatic drawings in which:
Figure 1 is a side view of a motor vehicle body;
Figure 2 is a perspective view of the part of the window frame shown circled at II in Figure 1 but omitting the window sealing and guiding strip assembly;
Figure 3 is a perspective view of the window frame of Figure 2 and the sealing and guiding strip assembly;
Figure 4 is a cross-sectional view of the frame and sealing and guiding strip on the line C-C of Figure 3 showing an arrangement according to a first embodiment of the invention;
Figure 5 is a cross-sectional view of the frame and sealing and guiding strip on the line A-A of Figure 1 according to a second embodiment of the invention;
Figure 6 is a cross-sectional view corresponding generally to Figure 5 but with the frame omitted and a modified distal or free end of the strip.
Figures 7 is a cross-sectional view of the strip of Figure 6 when attached to a frame.
Figure 8 is a perspective view of part of the window frame showed circled at II in Figure 1, showing an alternative arrangement of the frame to that shown in Figure 2;
Figure 9 is a cross-sectional view of the frame and sealing and guiding strip on the line B-B of Figure 1 in accordance with a further embodiment of the invention;
Figure 10 shows a cross-section taken on the line A-A of Figure 1 but modified in accordance with a further embodiment of the invention;
Figure 11 shows a cross-section taken along the line C-C of Figure 3 but modified in accordance with another embodiment of the invention;
Figure 12 is a cross-sectional view of a frame and sealing and guiding strip on the line A-A of Figure 1 according to a further embodiment of the invention, with the strip being shown detached from the frame;
Figure 13 is a cross-sectional view of the frame and sealing and guiding strip of Figure 12, but with the sealing and guiding strip shown attached to the frame;
Figure 14 is an enlarged view of the distal end of the strip of Figure 13 but with a modified configuration;
Figure 15 shows a cross-sectional view of the frame and strip along the line B-B of Figure 1 but with an alternative configuration; and
Figure 16 is a cross-sectional view of the frame and strip on the line A-A of Figure 1 according to a further embodiment of the invention.

In the drawings, like elements are generally designated with the same reference numeral.

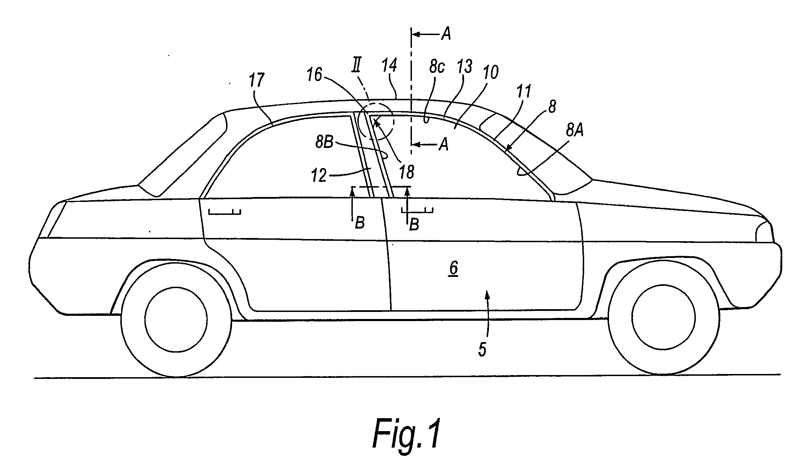

Figure 1 shows the side of a motor vehicle body having a door 5 with a lower part 6 carrying a window frame indicated diagrammatically at 8 for a window opening 10. In the usual way, a window glass for the opening 10 can be raised from and lowered into the lower part 6 of the door. The frame 8 carries the sealing and guiding strip (not visible in Figure 1) which will be described in more detail below.

The frame 8 comprises a part 8A along the sloping front of the door which is alongside the so-called "A" pillar 11 of the vehicle body, a generally vertical part 8B alongside the so-called "B" pillar 12 of the vehicle body, and a part 8C running along the top of the door generally parallel to the roofline 13.

Where the "B" pillar 12 meets the roof 14 of the vehicle, a sharp angle (substantially 90°) is formed, at 16. The corner does not have to have a "sharp angle" - the angle may be substantially less than 90° but will generally be at least 45°. In a manner to be explained below, the sealing and guiding strip assembly to be described combines with the frame 8 to form a corresponding sharp angle 18 at the corner of the frame for receiving the matching angle of the window glass.

Although the embodiment relates to the "B" pillar and the corner thereof it should be understood that the invention equally applies to other parts of door frames that do not have corners or sharp corners - for example the "A" pillar and the "C" pillar.

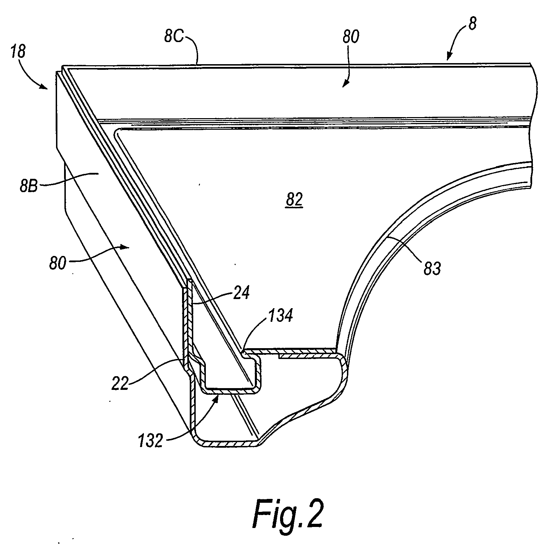

The frame 8 carried by the door 5 is (in this example) made of metal, such as extruded aluminium, or of hard plastics. Figure 2 shows part of the frame 8 at the corner 18 and is an enlarged view of the region II of Figure 1. The sealing and guiding strip assembly is omitted from Figure 2. The frame 8 is formed from two panels 22,24 of material which are shaped as shown and spot-welded together (or attached by any other suitable means).

At the region shown in Figure 2, the door frame 8 has a platform 82 (formed by panels 22,24). Extending generally perpendicularly with respect to the platform is flange 80 (formed by the panels 22,24).

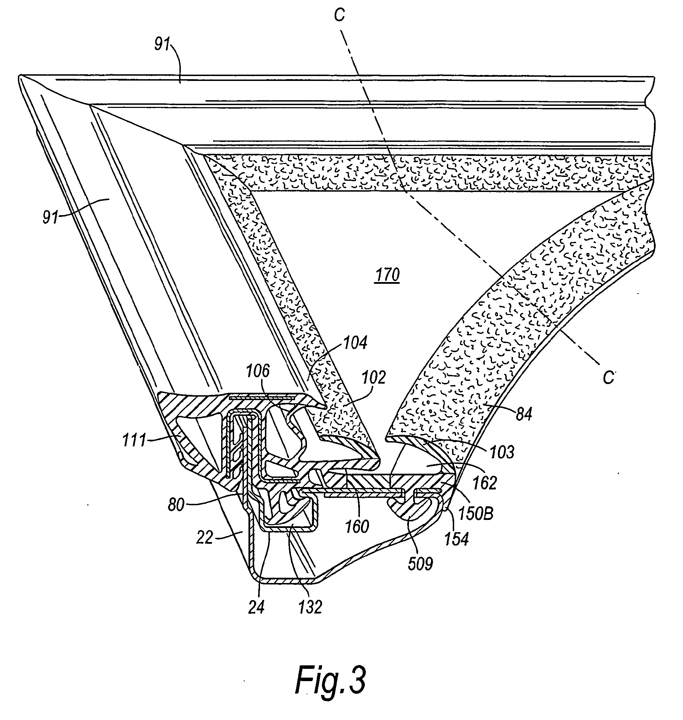

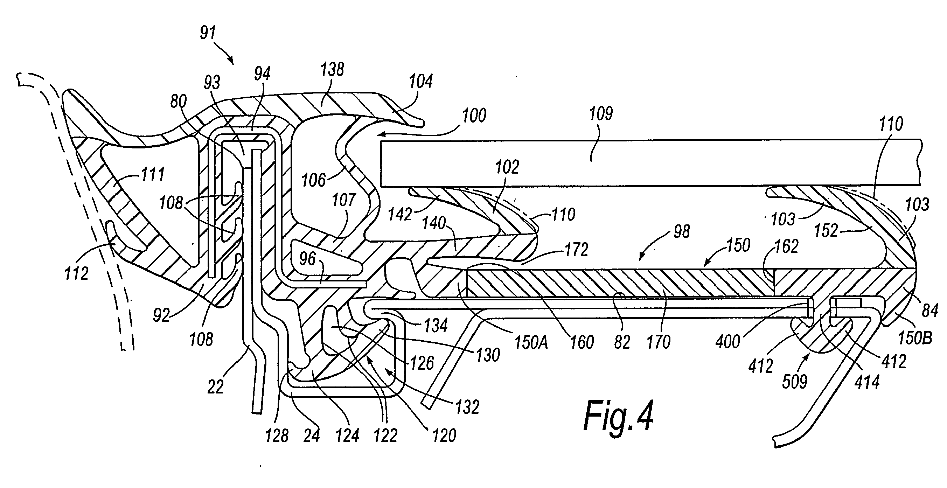

Figure 3 shows a perspective view of the sealing strip 91 and flange 80 in the region of circle II in Figure 1, and Figure 4 shows a cross-section taken along line C-C of Figure 2.

At the region away from the corner 18, the distal edge 83 (Figure 2) of the platform 82 extends substantially linearly and in parallel with the flange 80. At the region away from the corner 18, the distal edge 84 of the sealing strip 91 extends substantially linearly and in parallel with the flange 80 - and generally in alignment with the distal edge 83 of the platform 82.

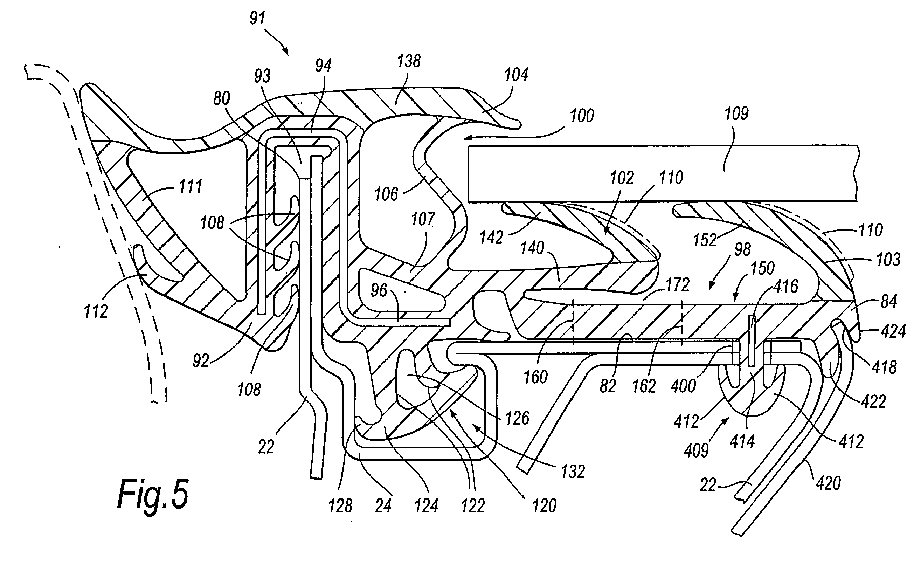

The strip 91 comprises extruded material 92, such as plastics, EPDM, TPE or rubber material, which defines a channel 93 and incorporates a channel-shaped metal carrier 94 embedded within the material of the strip 91, as shown for example in Figures 4 and 5. The carrier 94 may take any suitable form. It may be in the form of a continuous unapertured metal channel. Instead, it may be apertured to increase its flexibility. In another form, it comprises a series of side-by-side generally U-shaped metal elements defining the channel and either entirely disconnected from each other or connected such as by short integral flexible connecting links. In a further form, the carrier comprises looped wire. Other possible forms of carrier may be used, though. As shown, the carrier 94 has an integral extension 96 which extends at right angles to the channel 93.

The strip 91 includes a wall 98 of a window glass receiving channel 100. The wall 98 includes two lips 102,103, and the opposite wall of the glass-receiving channel 100 is formed by a lip 104. A first web 106 is formed at the base of the channel 100. As the window glass 109 closes, the glass 109 presses against the web 106 to improve the seal with the glass. The first web 106 is integrally extruded with a second web 107 which extends approximately parallel to the extruded material in which carrier extension 96 is embedded.

At the opposite side of the carrier extension 96 a generally hook-shaped part 120 is integrally extruded. The hook-shaped part 120 includes walls 122 which meet at a base 124, and between them define a space 126. The base 124 includes projections 128,130 at opposite ends thereof for engaging a channel 132 formed by the panel 24, and in particular engaging the flange 134 formed by the panel 24 at the entrance to the channel 132. The walls 122 and base 124 are resiliently deformed as the hook-shaped part 120 is pushed into the channel 132, whereafter they resile and locate the strip 91 with respect to the channel 132. The carrier extension 96 increases the rigidity of the strip 91 in the region of the hook-shaped part 120 to improve this positioning.

The inner lip 102 includes a base part 140 and a sealing part 142, the latter pressing against window glass 109 in use. The sealing part 142 is shown with a different hatching pattern, indicating that it is made of softer material than the base 140 (and other parts of the strip 91 hatched similarly to the base 140).

The upper part 138 of the sealing strip (as shown in the Figures) may also be formed of a relatively soft material, as indicated by the different hatching.

The base 140 of the lip 142 integrally extends from the region where the hook-shaped part 120, first web 106 and second web 107 meet. The base 140 is generally planar. From approximately mid-way along the base 140 of the lip 102 the generally planar base 150 of the lip 103 extends. The base 150 extends generally parallel to the base 140. The lip 103 includes a sealing part 152, similar to the sealing part 142 of the lip 102. As with lip 102, the different hatching pattern of the sealing part 152 indicates that this part is formed of softer material.

As can be seen in Figures 3,4 and 5, the base 150 covers the part of the panels 22,24 and the platform 82 (shown in Figure 2) so that these cannot be seen.

In use, two lengths of the sealing strip 91 are mounted in position on the flange 80 leading towards and up to the corner 18 by positioning the strip so that the flange 80 engages in the channel 93 and the hook-shaped part 120 engages the channel 132. The strip 91 firmly grips the flange 80, the gripping force being assisted by the resilience of the metal carrier 94 and also by the provision of integral flexible lips 108 which extend inwardly of the channel 93. The lips 108 may be extruded so as to be of softer material than the remainder of the extruded material 92, to increase their frictional grip. The two strips 91 are mitre-cut and joined at a line extending to corner 18. In this way, the strips 91 present their glass-receiving channels 100 in the plane of the window opening 10 so that the sliding window glass 109 enters the channel 100. The outwardly facing surfaces of the lips 102 and 104 are coated with flock 110 where they meet the window glass 109. The flock can be formed as part of the extrusion process which forms the strips 91.

As shown in Figure 4, the sealing strip 91 includes a hollow sealing member 111 on the outside of the window frame, that is, on the outside edge of the door. This sealing member 111 engages the frame of the door opening when the door 5 is closed, to provide a seal around the edge of the door. A lip 112 extends from the sealing member 111 and also engages the frame of the door opening when the door 5 is closed.

In this embodiment the strip 91 extending along the roofline and the strip 91 extending along the B pillar 12 have generally the same configuration - but this is not essential.

As explained above, the platform 82 is present at the corner 18 but is not present at other areas of the frame 8 (for example as it extends generally parallel to the vehicle roof 14 and generally parallel to the A and B pillars 11,12 - other than at the corner 18). It is generally desired to have a single extruded glass run extending continuously along the B-pillar and another extruded glass run extending continuously along the roof line and the A-pillar. This provides an attractive appearance, without the joins (other than at the corner 18).

In order to accommodate the platform 82 at the corner 18, the extruded material of the base 150 of the lip 103 may be cut at cut lines 160,162, splitting the base 150 into an inner base part 150A and an outer base part 150B. The extruded material between the cut lines 160,162 is discarded. A planar sheet of rubber material 170 is then inserted and moulded onto the parts 150A and 150B at the points of the cut lines 160,162 to form a flap of flexible material extending over the platform 82. The flap is generally triangular in shape but curved along the hypotenuse.

Advantageously, the join between the inner base part 150A and the moulded part 170 is obscured from view by the base 140 of the lip 102. Additionally, the join between the moulded part 170 and the outer base part 150B is obscured by the sealing part 152 of the lip 103.

The moulded part 170 may be formed of TPE or EPDM or any other suitable material. The end of the base part 140 from which the sealing part 142 integrally extends may be joined to the moulded part 170 at the region 172 during the moulding operation which forms the part 170 in order to better locate the sealing part 142 of the lip 102. The connection between the base part 140 and the moulded part 170 at the region 172 may alternatively be achieved by applying an adhesive. It should be understood that the connection between the base part 140 and the moulded part 170 at region 172 is not necessary or essential to the invention.

Figures 5 shows a cross-section taken along the line A-A of Figure 1, at a region along the roof line of the frame 8 but spaced from the corner 18 and the platform 82. The strip 91 and the frame 8 in cross-section taken along the B-pillar 12 away from the corner 18 and the platform 82 may have a similar configuration. For ease of understanding the cut lines 160 and 162 are shown in Figure 5. However, in these Figures the extruded material of the base 150 of the lip 103 is not cut and remains in the form as originally extruded. The moulded part 170 is not required in the regions of the strip 91 away from the corner 18 and the platform 82. In a similar manner to Figure 4, the base 140 of the lip 102 may be joined to the base 150 of lip 103 at a region 172. In Figure 5 this joining may be performed immediately after the extrusion process, that integrally forms the complete strip 91 as shown, by pressing the base 140 and the base 150 together by rollers at the region 172. Alternatively, this joining could be achieved by applying an adhesive. The joining at the region 172 is not essential to the invention.

As shown in Figure 5, a clip 409 is integrally formed with the base part 150 during the extrusion process that forms the base part 150 (and other extruded components of the strip 91). The clip 409 extends from the underside of the base part 150 (as shown in Figure 5) and passes through an aperture 400 formed in the panels 22 and 24/platform 82. The clip 409 is located at the free end of the strip 91 (near the distal edge 83). The clip 409 comprises head portions 412 which are resiliently deformable in order to allow the clip 409 to pass through the aperture 400, whereafter the head portions 412 resile and clamp the base part 150 to the panels 22,24/platform 82. The head portions 412 are connected to the base part 150 by an integral linear stem 414. Embedded within the stem 414 may be a relatively rigid length of material or a carrier 416. Such a carrier 416 is, however, optional. The carrier 416 may preferably comprise metal, but could also be formed of other rigid material, such as hard rubber or plastics. The carrier 416 may be planar, elongate member which extends into and out of the page of Figure 5 as shown. The carrier 416 is positioned so that it extends approximately into two thirds of the depth of the base part 150 and into approximately one half of the depth of the stem 414, the lower end of the carrier 416 extending through the aperture 400.

A first part of the panel 22 extends generally parallel to the panel 24 in the region of the base part 150, and the aperture 400 extends through both the panel 22 and the panel 24 in this region.

At a second part of panel 22, in a region just inward of the distal end of the base part 150 (from which the lip 103 extends), the panel 22 curves away from the panel 24 through approximately 120°, whereafter it extends generally downwardly and eventually meets with the part of the panel 22 located within the channel 93. It should be noted that, although respective "parts" of the panel 22 are referred to, these are preferably parts of the same, integrally formed, sheet of material.

At the distal end of the base 150 at the free end region of the strip 91, the base 150 has an obliquely angled (with respect to the platform 82) slot 418 formed therein. The end of member 420 is accommodated in this slot 418, which pushes apart the opposite sides of the slot 418. The material 422 on the lower side of the slot 418 may abut the second, curved part of the panel 22. The material 424 on the upper side of the slot 418 may terminate in a point which abuts the outer surface of the member 420 without leaving any significant gap between the material 424 and the member 420 in order to provide a sharp and visually appealing transition between these two components. The member 420 may be a rigid member - for example a panel of the door - or may be a trim piece. The trim piece may, for example, be an extension of the interior trim used within the vehicle, and may, for example, be coloured to compliment the upholstery in the interior of the vehicle.

Figure 4 shows a clip 509, of similar configuration to the clip 409 of Figure 5, that is integrally formed from the outer base part 150B of extruded material of the base part 150. However, in this embodiment, no carrier corresponding to the carrier 416 of the Figure 5 embodiment is provided. Advantageously, the outer base part 150B is harder than the material of the lips 102 and 103 (and optionally harder than the material used to form the other extruded parts of the strip 91). Forming the extruded part 150B from relatively hard material will improve the effectiveness of the clip 509 in securely locating the distal end of the base part 150 with respect to the platform 82.

The panel 22 of Figure 4 has a similar configuration to the panel 22 of Figure 5.

The clip 509 of Figure 5 may be provided with a carrier 416 like that shown in Figure 4 - in addition to or alternatively to the use of the relatively hard material. Likewise, the clip 409 of Figure 4 may be formed from relatively hard material in addition or alternatively to the use of the carrier 416.

The clips 409 and 509 of Figures 5 and 4 may more securely locate the free end of the strip 91 (near the distal edge 84) and the sealing lip 103. The member 420 (if provided) may also assist in securing the free end of the strip 91 when it is engaged in the slot 418. This may be advantageous in cold weather conditions, when the lip 103 may freeze to the window glass 109. Raising or lowering the window glass 109 in these conditions will cause the lips 102 and/or 103 to move with the window whilst they are adhered thereto. After a degree of movement the resilience of the lips 102/103 will break the bond to the window glass 109 in most circumstances. By attaching the free end of the strip 91 part 170 more securely to the platform 82 the amount of movement of the lip 102 and/or 103 in such circumstances is reduced.

Only clip 409 (and not clip 509) may be provided, or only clip 509 (and not clip 409) may be provided.

The clip 509 may extend along the entire extent of the platform 82 or may extend along only a portion thereof. The clip 409 may extend along the entire extent of the roof line 13 and/or "B" pillar 12. A plurality of separate, spaced apart, clips 409 or 509 may be provided along the distal edge of the base part 150 for engaging respective spaced apart apertures 400 formed in the platform 82/panels 22,24.

The strip 91 is preferably fitted to the frame 8 of the vehicle door 5 by, as a first step, sliding the flange 80 (comprising the panels 22 and 24) into the channel 93 of the strip 91. At the same time, the (optional) hook-shaped part 120 will engage the channel 132 formed by the panel 24. As a second, subsequent step, the free or distal end of the strip 91 may be fitted to the platform 80 (comprising panels 22 and 24) by means of the clip 409 and/or clip 509. Alternatively, the first and second steps may be performed simultaneously or substantially simultaneously.

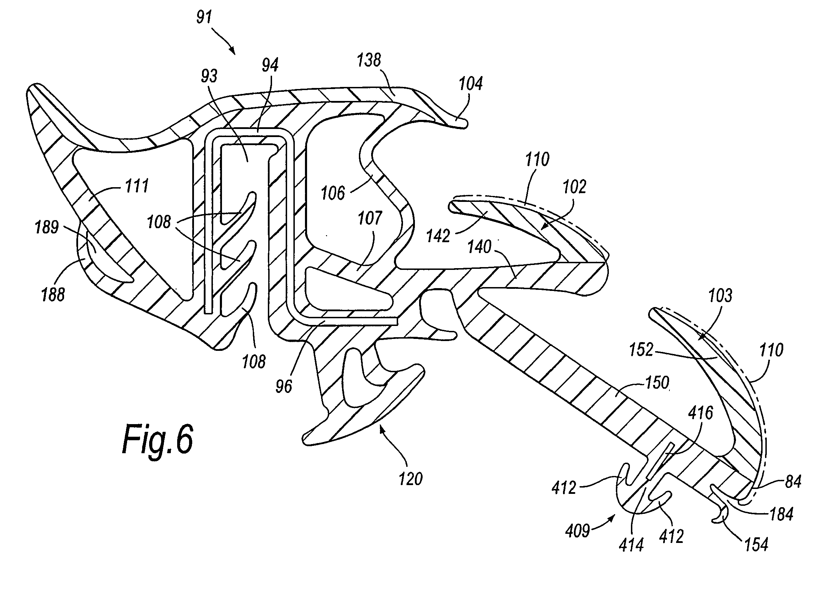

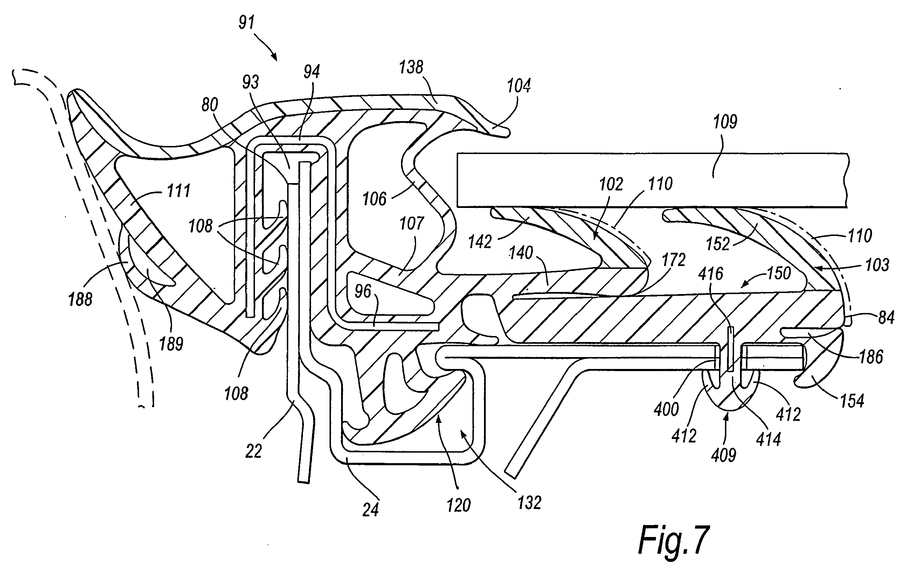

The free or distal end may be biassed downwardly towards the platform 82/panels 22,24 to assist the location thereof. This biassing is shown in Figure 6, where the base 150 is shown as extending away from the base 140. The sealing strip 91 may have this configuration after it exits the extrusion die used for forming the seal 91. The biassing may assist in locating the member 420 (if provided) in the slot 418. The base 150 will be resiliently pushed into generally parallel alignment with the base 140 when the sealing strip 91 is mounted to the panels 22,24 (as shown in Figure 7). However, it may be advantageous to arrange the extrusion process and the extrusion die such that the base 150 extends generally parallel to the base 140 even when the strip 91 is not mounted to the panels 22,24. In such an arrangement, the base 150 would not extend away from the base 140 in the manner shown in Figure 6 as the strip 91 exits the extrusion die.

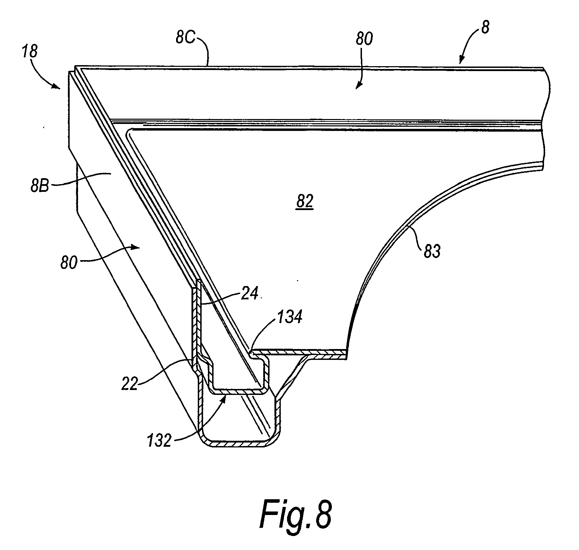

The strip shown in Figure 6 and 7 corresponds generally to those shown in Figure 5 but the configuration at the distal end 84 region is different. As shown in Figure 8, the configuration of the panels 22, 24 is also different in the region of the distal end 83 of the platform 82.

The panel 22 is arranged to extend towards and join the panel 24 at approximately a mid point of the platform 82. Thereafter, the panel 22 extends parallel to the panel 24, and is coupled thereto by spot welding or the like. The distal end 83 of the platform 82 forms a flange.

As shown in Figure 6 a recess 184 may be formed at the distal end 84 of the sealing strip 91. The open ends of the recess 184 may be joined together immediately after extrusion by pressing them together with a roller, thereby forming a cavity or chamber 186 from the recess 184 (as shown in Figure 7). Alternatively, the open ends of the recess could be coupled together by adhesive. However, the open ends of the recess need not be joined together in this way. When the extruded material of the strip 91 is mounted on the frame 8 (as shown in Figure 7) the planar configuration of the panels 22,24 extending generally parallel to the base 150 will, in conjunction with a force applied by the resilience of the clip 409, tend to press the open ends of the recess together, thereby forming the cavity or chamber 186 from the recess 184.

In this embodiment, the flock 110 applied to the lip 103 is formed along the sealing part 152 and down to the corner formed at the opening of the recess and possibly partway into the recess 184. The flock 110 is formed during the extrusion process. When the strip is mounted to the frame 8 (and/or when the chamber 186 is formed by joining the open ends of the recess), a sharp and visually pleasing line of separation (or edge) between the flocked layer 110 and the cosmetic lip 154 is formed). As will be known to those skilled in the art, it is very difficult to produce a sharp linear edge to a flocked area. By providing the recess 184/cavity 186 of this embodiment, this disadvantage is overcome. The flocked sealing part 152 is abutted against a non-flocked surface 182 of the cosmetic lip 154 to provide the desired linear edge to the flock 110.

In the embodiment shown in Figure 6 and 7 the lip 112 extending from the sealing member 111 of the first embodiment is replaced with an abutment wall 188 extending from the sealing member 111. The abutment wall 188 and the sealing member 111 define a hollow chamber 189. The sealing member and the abutment wall 188 engage the frame of the door opening when the door 5 is closed, to provide a seal around the edge of the door. The use of a lip 112 or abutment wall 188 may be selected for use in any of the embodiments disclosed herein in accordance with the circumstances.

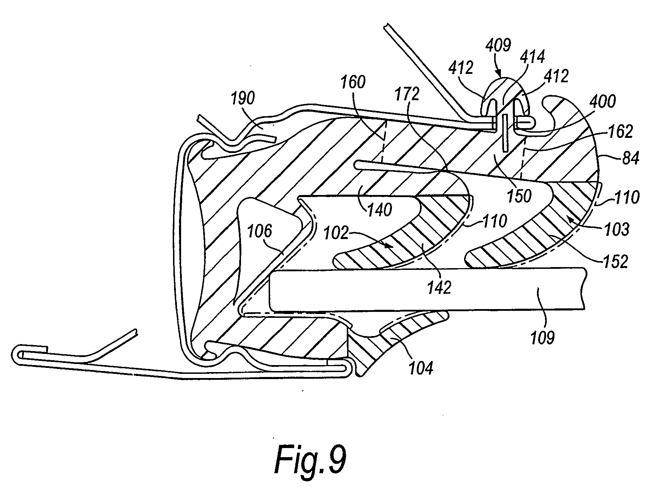

As indicated above, Figure 5 shows a cross-section taken along the line A-A of Figure 1 - along the roof line 13 of the frame 8. As mentioned in relation to Figure 5, the configuration along the B-pillar 12 may be similar. However, the frame 8 may have a different configuration along the B-pillar 12, for example as shown in Figure 9. In Figure 9 the frame 8 forms a generally U-shaped channel 190 (formed by various shaped and connected panels formed of suitable material such as metal or rigid plastics). The strip 91 extending along the B-pillar 12 does not include the channel 93 but instead is clamped by the U-shaped channel 190. An upper (in the Figure) leg of the U-shaped channel 190 extends generally parallel to the base 150 of the second lip 103. The lower (in the Figure) leg of the U-shaped channel 190 extends generally parallel to the lip 104 of the strip 91, pressing this lip against the window glass 109. No carrier 94 is provided, and only a single web 106 is formed. The hook-shaped part 120 is also omitted as it is not required and no corresponding channel 132 is provided in the U-shaped channel 190. Other parts of the strip 91 though correspond generally to those similarly referenced and similarly appearing parts described above. In Figure 9 the cut lines 160 and 162 are shown, where the extruded material of the base 150 is removed in the region II (Figure 1). Moulded material as shown in Figure 4 may be moulded onto the extruded material of the base part in region II, as described above, thereby forming the planar moulded part 170 extending between the strip 91 running parallel to the roof line 13 and the strip 91 running parallel to the B-pillar 12.

The arrangement shown in Figure 9 may be modified to include the recess 184/cavity 186 described in relation to Figure 6 and 7 in order to provide the desirable visually pleasing linear edge to the flocked surface 110 of the lip 103.

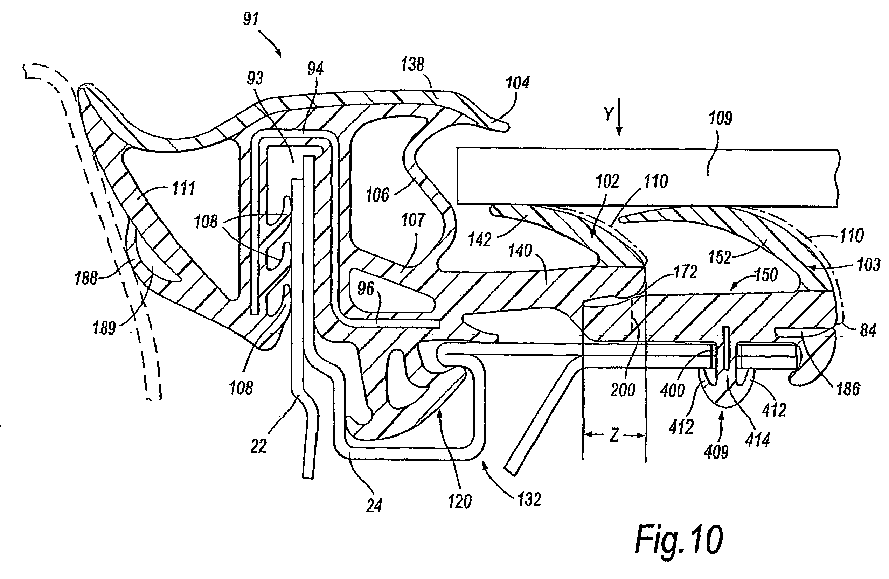

In the embodiments described above two cut lines are formed in the extruded material of the base 150 in order that the moulded part 107 can be inserted. Figure 10 shows a modification in which only a single cut line 200 is formed. The extruded material is separated at the cut line 200 and a moulded part 170 corresponding generally to the moulded part 170 described above in relation to Figure 4 is inserted in the region II of Figure 1. The inner join between the moulded part 170 and the extruded base 150 will be obscured by the base 140 of the first lip 102. The outer join between the moulded part 170 and the extruded base 150 is obscured by extending the sealing part 152 of the second lip 103 to a point Y, such that it overlies the join at the cut line 200.

The distance Z between the point where the base 150 joins the base 140 and the distal end of the base 140 is preferably ≤ 3mm in the Figure 10 embodiment and all the other embodiments.

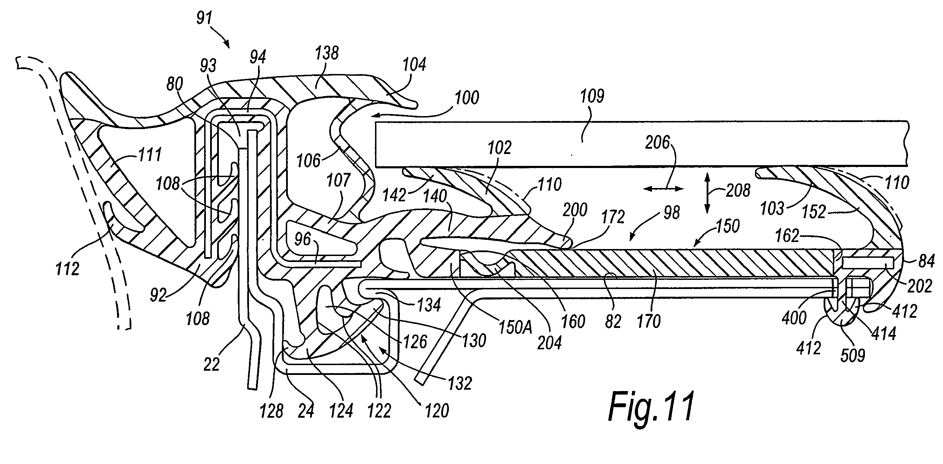

Figure 11 shows a cross-section taken along the line C-C of Figure 3 but modified in accordance with a further embodiment of the invention. The Figure 11 embodiment is similar to the embodiment shown in Figures 1 to 4 (Figure 11 corresponding to the view shown in Figure 4). However, the Figure 11 embodiment includes the modifications discussed below.

Firstly, the web 106 is made of material which is relatively soft compared to the base 140 and other parts of the sealing strip 91 that are hatched similarly to the base 140. For example, the first web 106 may have the same or substantially the same hardness as the upper part 138 of the sealing strip 91 and the lips 102,103. As before, the first web is integrally extruded with other parts of the strip 91.

In a second modification, the base 140 of the lip 102 terminates in a lip 200 which meets the moulded part 170 at the tip region 172 thereof. As in the previous embodiments, the region 172 may be joined to the moulded part 170 during the moulding operation which forms the part 170, in order to better locate the sealing part 142 of the lip 102. The connection between the region 172 and the moulded part 170 may alternatively be achieved by applying an adhesive, although it should be understood that the connection between the base part 140 at region 172 and the moulded part 170 is not necessary or essential to the invention.

In a third modification the upper surface of the base part 140 of the lip 102 (which faces the sealing part 142 of the lip 102) has a domed surface.

In a fourth modification an additional relatively rigid carrier 202 is incorporated in the outer base part 150B of the base 150 of the strip 91. The carrier 202 may preferably comprise metal, but could also be formed of another rigid material, such as hard rubber. The additional carrier 202 is a planar elongate member which extends into and out of the page of Figure 11 as shown. The carrier 202 is positioned in the region where the sealing part 152 of the lip 103 meets the outer base part 150B. The carrier 202 increases the longitudinal rigidity of the distal end of the base part 154.

The carrier 202 is integrally embedded within the base part 150 during the extrusion process that forms the base 150 (and other extruded components of the strip 91). The strip 91 will emerge from the extruder as it is formed. The presence of the additional carrier 202, by increasing the longitudinal rigidity, will eliminate or reduce the tendency for the strip 91, and in particular the distal end of the base 150, to sag or bend downwards as it emerges from the extruder. This makes it easier to handle the strip 91. For example, it is easier for the strip 91 to be accurately cut to the required size. The additional carrier 202 also makes it easier to locate and position the strip 91 in the mould during which the flap 170 is moulded thereto. The carrier 202 may be provided in addition to a carrier 416 in the clip 509 (not shown). The carriers 202 and 416 may be formed of the same sheet of material, having an "L" or "T" shape.

In a fifth modification, a reduced thickness portion 204 of the moulded flap 170 is provided at the region where it connects to the inner base part 150A at cut line 160. The reduced thickness portion 204 is more readily longitudinally compressible and stretchable in the direction of arrow 206 than the remainder of the moulded flap part 170. In this embodiment the length (in the direction of arrow 206) will be larger than required (for example 10% larger than required) to allow the strip 91 with the moulded flap part 170 attached to fit over the distal end of the panels 22,24 (with the cosmetic lip 154 embracing the distal end of those panels). When the strip 91 is fitted to the panels 22,24 the reduced thickness portion 204 will have a curved or concertina-like configuration shown in Figure 11 due to the excess length of the moulded flap part 170.

The provision of the reduced thickness portion 204 allows the strip 91 to be fitted relatively simply to platforms 82 (formed of panels 22,24) of slightly varying dimensions - for example, due to manufacturing tolerances.

The reduced thickness portion 204 may also simplify the mounting of the strip 91 to the platform. The reduced thickness portion can be extended (so that it extends linearly and possibly is further elastically stretched) in order to assist in locating the free end of the strip around the distal end of the platform 82 and aligning the clip 509 with the aperture 400. The clip 509 may clamp the strip in position on the platform to prevent further compression or stretching of the reduced-thickness portion 204.

When the reduced-thickness portion 204 is provided, it may be advantageous not to join the lip 200 to the moulded flap part 170 at region 172 (as this would restrict the amount of compression or extension of the flap 170). However, even if the lip 200 is connected to the flap 170 at the region 172, movement of the flap 170 could be accommodated by compression or extension of the lip 200 (which could itself have a reduced thickness portion like the reduced thickness portion 204).

The reduced thickness portion 204 also allows the strip 91 to accommodate variations in the orientation of the platform 82. For example, if the platform 82 is not precisely perpendicular to the flange 80, the reduced thickness portion 204 allows the flap to follow changes in orientation of the platform 82 in the direction of arrow 208.

It should be appreciated that, although the reduced thickness portion 204 is shown at the end of the flap 170 which joins the inner base part 150A at cut line 160, the reduced thickness part 204 could be positioned at the opposite end of the flap, joining the outer base part 150B at cut line 162, or at any position along the length of the flap 170. If the reduced thickness portion 204 is positioned outwardly of the region 172, the lip 200 may advantageously be moulded or adhered to the flap 170.

It should further be appreciated that the compressibility and extendability/stretchability of the flap 170 may be provided other than by a reduced thickness portion 204. For example, a portion of the flap 170 may have a different composition or be treated in a manner that allows it to be relatively compressible/stretchable compared to the remainder of the flap 170. Further alternatively, the entire flap 170 can be made of a material that is easily stretchable/compressible in order to accommodate manufacturing tolerances in the platform 82.

Although the first to fifth modifications described above are shown in a single embodiment, it should be appreciated that any one of or any combination of these modifications could be made to a sealing strip and provide the advantages associated with the or each selected modification. It is not necessary for all five of the modifications to be provided to a single sealing strip. For example, any one of or any combination of the modifications could be applied to the sealing strip shown in Figures 1 to 10.

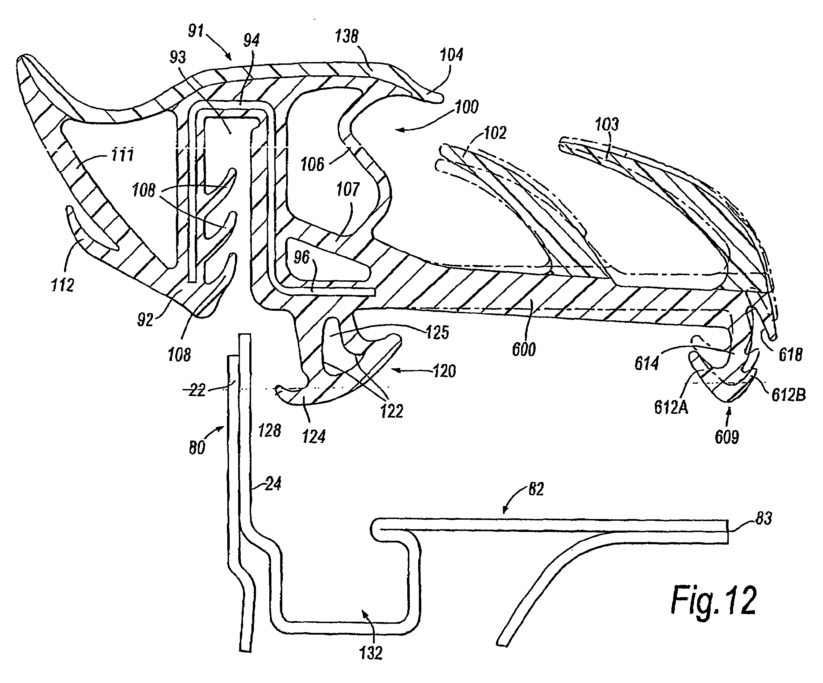

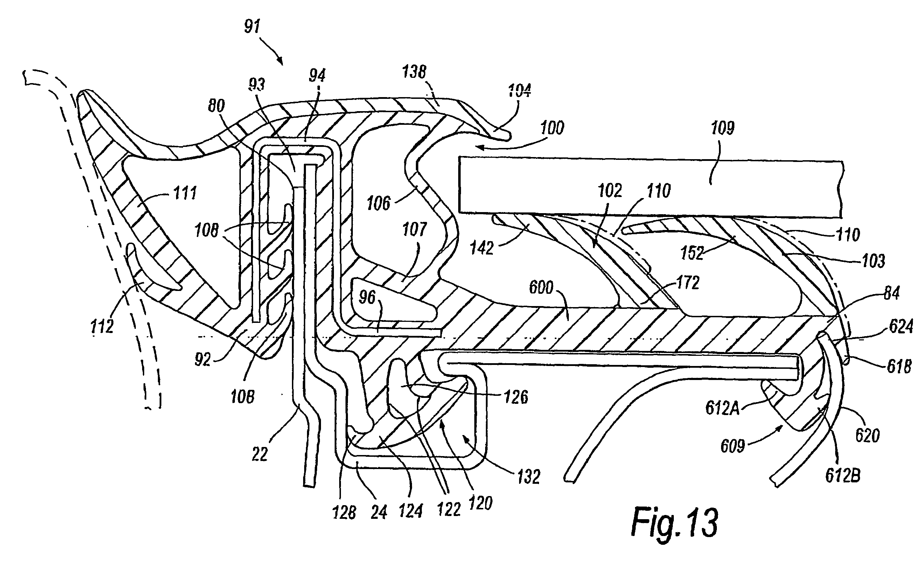

Figures 12 and 13 show a further embodiment of the invention. In this embodiment the arrangement of the strip in the region that overlies the platform 82, and from which the lips 102, 103 extend, is different. Extending from the strip from the region where the carrier extension 96 is embedded is a limb 600. The limb 600 extends away from the channel 93 that receives the flange 80 to form one side wall of the glass-receiving channel 100, the opposite side wall of the glass-receiving channel 100 being formed by the lip 104. The lips 102,103 extend integrally from the limb 600, but may be formed from soft material, as indicated by the different hatching pattern. The lips 102, 103 may be provided with a flock surface (not shown in Figures 12 and 13). A clip 609 is integrally formed with the limb 600 during the extrusion process that forms the limb 600 (and other extruded components of the strip 91). The clip 609 extends from the underside of the limb 600 (as shown in Figures 12 and 13). The clip 609 is located at the free or distal end of the limb 600. The clip 609 comprises an inner head portion 612A and an outer head portion 612B which are resiliently deformable. The head portions 612 A, B are connected to the limb 600 by an integral linear stem 614. A relatively rigid linear length of material may be embedded in the linear stem 614 in a similar manner to the material 416 shown in Figure 5. The stem 614 extends from the opposite side of the limb 600 to, and in approximate alignment with, the outer lip 103.

At the outer edge of the limb 600 an obliquely angled (with respect to the channel 93 which receives the flange 80) slot 618 is formed.

As shown in Figure 12, the limb 600 does not extend perpendicularly with respect to the channel 93 that receives the flange 80. The limb 600 is biassed downwardly (as shown in Figure 12). That is, the limb is pre-formed so that in its natural state the limb extends downwardly with respect to the channel 93 that receives the flange 80. The strip 91 may have the configuration shown in Figure 12 after it exits the extrusion dye for forming the strip 91.

As shown in Figure 12, the flange 80 extends perpendicularly to the flange formed in the region of the distal end 83 of the platform 82, where the panels 22 and 24 meet. The downward biassing of the limb 600 means that, as the strip 91 is mounted on the flange 80, the distal end of the limb 600 will be closer to the platform 82 than the part of the limb 600 proximate the carrier extension 96.

As the flange 80 extends further into the channel 93, the inner head portion 612A contacts the distal end 83 of the platform 82. This causes the inner head portion 612A (and optionally also the stem 614) to bend or flex outwardly (away from the channel 93) so that it clears the distal edge 83 of the platform 82, whereafter, due to the resilience of the material of the clip 609, the inner head portion 612A (and the stem 614) resile, such that the inner head portion 612A presses against the underside of the panel 22 to clamp the distal end of the limb 600 to the distal end 83 of the platform 82.

Full insertion of the flange 80 in to the channel 93 causes the limb 600 to extend parallely to the platform 82 (and perpendicularly to the channel 93 and flange 80), against the downward bias of the limb 600. The limb 600 (and the lips 102, 103) and the clip 609 extending therefrom then move to the position shown in dotted lines in Figure 12, and as shown in Figure 13.

In addition to easing assembly of the sealing strip 91 to the frame 8, comprising the flange 8 and platform 82 (formed with panels 22, 24), the downward biasing of the limb 600 may also serve to more securely couple the distal end of the limb to the distal end 83 of the platform 82.

A member 620 may extend into the recess 618. The material 624 on the upper side of the slot 618 may terminate at a point which abuts the outer surface of the member 620 without leaving any significant gap between the material 624 and the member 620 in order to provide a sharp and visually appealing transition between these two components. The member 620 may be a rigid member - for example a panel of the door - or maybe a trim piece. The trim piece may, for example, be an extension of the interior trim used within the vehicle, and may, for example, be coloured to compliment the upholstery in the interior of the vehicle. The member 620 hides the clip 609 from view.

The member 620 curves away from the recess 618 such that it abuts the outer head portion 612B. The serves to more securely couple the distal end of the limb 600 to the distal end 83 of the platform 82 by pressing the clip 609 firmly against the distal edge 83 of the platform 82.

The embodiment of Figures 12 and 13 simplifies the process of mounting the strip 91 to the flange 80 and platform 82 because the downward biasing of the limb 600 facilitates the automatic fitting of the clip 609 over the distal end 83 of the platform 82. The downward biasing of the limb 600 also serves to more securely couple the limb 600 to the distal end 83 of the platform 82, which coupling is further enhanced by the presence of the clip 609 and, optionally, the recess 618 which co-operates with the member 620.

The outer head portion 612B may be smaller than the inner head portion 612A. Alternatively, the outer head portion 612B may be omitted completely, so that the distal end of the stem 614 abuts the member 620 (if present).

As indicated above, the clip 609 of Figures 12 and 13 may more securely locate the free end of the strip 91 and the sealing lip 103. The member 620 (if provided) may also assist in securing the free end of the strip 91 when it is engaged in the slot 618. This may be advantageous in cold weather conditions, when the lip 103 may freeze to the window glass 109. Raising or lowering the window glass 109 in these conditions will cause the lips 102 and/or 103 to move with the window whilst they are adhered thereto. After a degree of movement the resilience of the lips 102/103 will break the bond to the window glass 109 in most circumstances. By attaching the free end of the strip 91 more securely to the platform 82, the amount of movement of the lip 102 and/or 103 in such circumstances is reduced.

The clip 609 may extend along the entire extent of the platform 82 or may extend along only a portion thereof. The clip 609 may extend along the entire extent of the roof line 13 and/or "B" pillar 12. A plurality of separate, spaced apart, clips 609 may be provided at the distal edge of the limb for engaging the distal end 83 of the platform 82/panels 22,24.

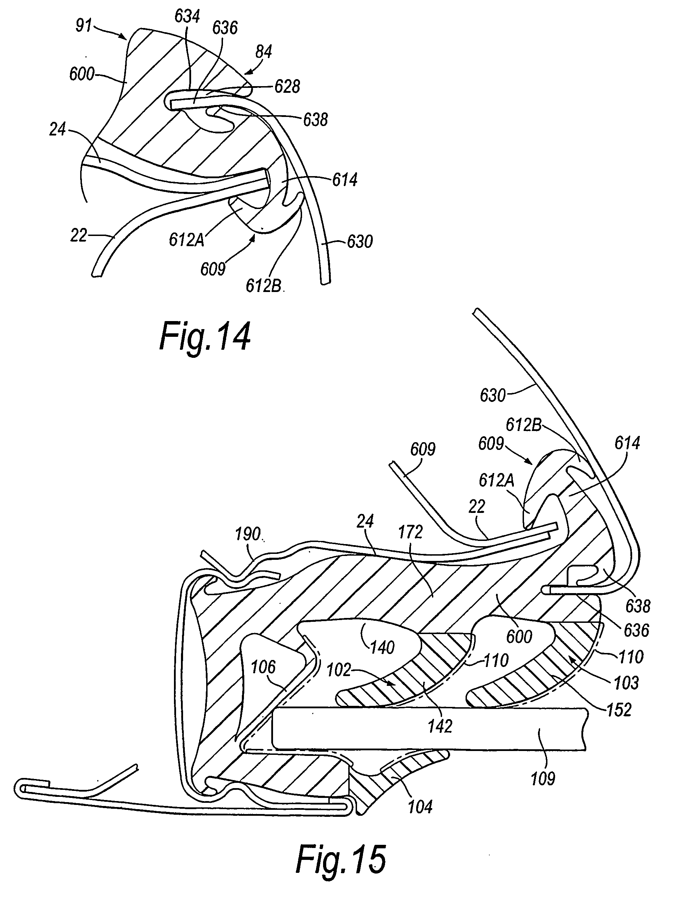

Figure 14 shows a modification to the Figure 13 embodiment, in which the distal edge 84 region has a different configuration. Figure 13 is an enlarged view of the distal edge 84 region; the configuration of the strip 91 and panels 22,24 elsewhere is the same as shown in Figure 13.

As in Figure 13, a clip 509 is integrally formed with the limb 600 during the extrusion process that forms the limb 600 (and other extruded components of the strip 91). The clip 609 extends from the underside of the limb 600. The clip 609 is located at the free or distal end of the limb 600. The clip 609 comprises an inner head portion 612A and an outer head portion 612B which are resiliently deformable. The head portions 612A,B are connected to the limb 600 by an integral linear stem 614. The stem 614 extends from the opposite side of the limb 600 to, and in approximate alignment with, the outer lip 103.

At the outer edge of the limb 600 a slot 628 is formed. The slot 628 extends generally parallel to the limb 600 (when mounted on the panels 22,24) and generally perpendicular to the channel 93.

A member 630 may extend into the recess 628. The material 634 on the upper side of the slot 628 may terminate at a point which abuts the outer surface of the member 630 without leaving any significant gap between the material 634 and the member 630 in order to provide a sharp and visually appealing transition between these two components.

The lower side of the slot 628 may have an integrally formed lip 63 8 that extends from the mouth of the slot 628 into the slot 628. The lip 638 presses against the member 630.

The member 630 may be a rigid member - for example a panel of the door - or maybe a trim piece. The trim piece may, for example, be an extension of the interior trim used within the vehicle, and may, for example, be coloured to compliment the upholstery in the interior of the vehicle. The member 630 hides the clip 609 from view.

The member 630 has a linear end portion 636, which is accommodated in the slot 628, whereafter the member 630 curves away from the recess 628 such that it abuts the outer head portion 612B of the clip 609. The serves to more securely couple the distal end 84 of the limb 600 to the distal end 83 of the platform 82 by pressing the clip 609 firmly against the distal edge 83 of the platform 82.

The outer head portion 612B may be smaller than the inner head portion 612A. Alternatively, the outer head portion 612B may be omitted completely, so that the distal end of the stem 614 abuts the member 620 (if present).

The clip 609 may more securely locate the free end of the strip 91 and the sealing lip 103. The member 630 may also assist in securing the free end of the strip 91 when it is engaged in the slot 628.

The clip 609 may extend along the entire extent of the platform 82 or may extend along only a portion thereof. The clip 609 may extend along the entire extent of the roof line 13 and/or "B" pillar 12. A plurality of separate, spaced apart, clips 609 may be provided at the distal edge of the limb for engaging the distal end 83 of the platform 82/panels 22,24.

Figure 14 shows a cross-section taken along the line A-A of Figure 1 - along the roof line 13 of the frame 8. The configuration along the B-pillar 12 may be similar. However, the frame 8 may have a different configuration along the B-pillar 12, for example as shown in Figure 15. In Figure 15 the frame 8 forms a generally U-shaped channel 190 (formed by various shaped and connected panels formed of suitable material such as metal or rigid plastics). The strip 91 extending along the B-pillar 12 does not include the channel 93 but instead is clamped by the U-shaped channel 190. An upper (in the Figure) leg of the U-shaped channel 190 extends generally parallel to the base 150 of the second lip 103 (although in this embodiment the upper leg may be bent obliquely outwardly at its distal end). The lower (in the Figure) leg of the U-shaped channel 190 extends generally parallel to the lip 104 of the strip 91, pressing this lip against the window glass 109. No carrier 94 is provided, and only a single web 106 is formed.

The arrangement shown in Figure 14, includes the slots 628 described in relation to Figure 14. The slot engages the member 630 in the manner described in relation to Figure 14.

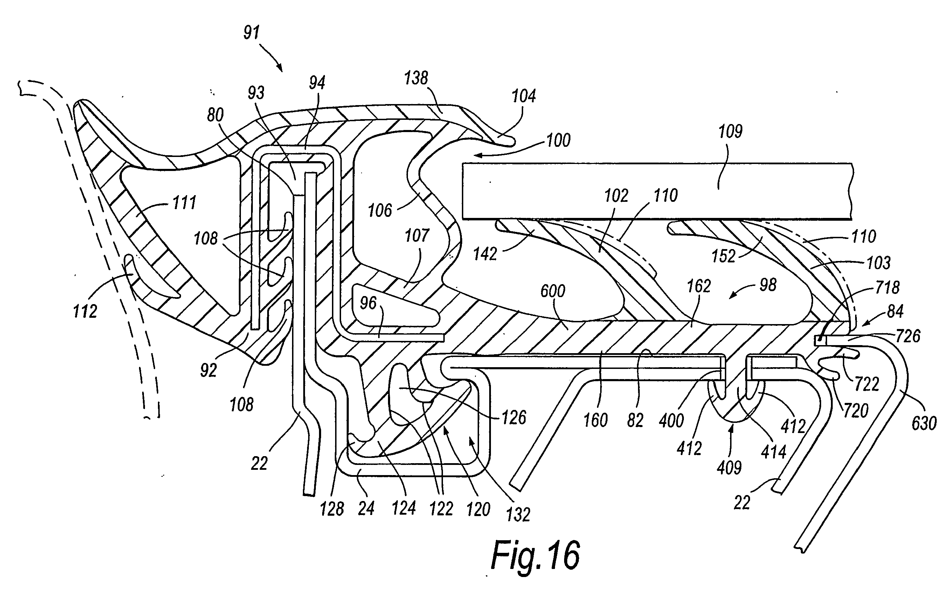

Figure 16 shows a further embodiment. In Figure 16 the panels 22,24 have the arrangement as shown in Figure 5, whilst the limb 600 has the arrangement shown generally in Figures 12,13 and 14; however, the configuration of the distal end 84 of the limb 600 of the strip 91 is different and the position and configuration of the clip is different.

The clip 409 has the same general configuration an dposition as the clip 409 of Figure 5. The clip is integrally formed with the base limb 600 during the extrusion process that forms the limb 600 (and other extruded components of the strip 91). The clip 409 extends from the underside of the limb 600 and passes through an aperture 400 formed in the panel 24/platform 82. The clip 409 is located at the free end of the strip 91 (near the distal edge 83,84). The clip 409 comprises head portions 412 which are resiliently deformable in order to allow the clip 409 to pass through the aperture 400, whereafter the head portions 412 resile and clamp the base part 150 to the panels 22,24/platform 82. The head portions 412 are connected to the base part 150 by an integral linear stem 414.

A first part of the panel 22 extends generally parallel to the panel 24 in the region of the limb 600 and the aperture 400 extends through both the panel 22 and the panel 24 in this region.

At a second part of panel 22, in a region just inward of the distal end 84 of the limb 600 (from which the lip 103 extends), the panel 22 curves away from the panel 24 through approximately 120°, whereafter it extends generally downwardly and eventually meets with the part of the panel 22 located within the channel 93.

At the distal end 84 of the limb 600.at the free end region of the strip 91, the limb 600 has a slot 718 formed therein. The slot 718 extends generally parallel to the limb 600 (when mounted on the panels 22,24) and generally perpendicular to the channel 93). The end of member 630 is accommodated in this slot 718, which pushes apart the opposite sides of the slot 718. The material 722 on the lower side of the slot 718 has a lip 720 integrally extending therefrom from a portion spaced from the distal edge 84, for example at a position where the panel 24 terminates. The lip 720 extends obliquely away from the limb 600 and the channel 93 and presses against the panel 22. The lip 720 assists in securing the limb 600 to the frame by means of the clip 409. As an alternative to the lip 720, a hollow chamber,could be provided. The member 630 has a linear end portion 726, which is accommodated in the slot 718. The member 630 may be a rigid member - for example a panel of the door - or may be a trim piece. The trim piece may, for example, be an extension of the interior trim used within the vehicle, and may, for example, be coloured to compliment the upholstery in the interior of the vehicle.

## Claims

1. A sealing or guiding assembly for a frame (8) defining an opening (10) and for sealing against a closure member (109), the assembly is **characterized by**:
a strip (91) of flexible material having a first end and a hook shaped portion (120) disposed at the first end of the strip (91) and configured for interlocking engagement within a recess (132) of the frame (8);
a wall (98) extending from the first end of the strip (91) and disposed on one side of the closure member (109) and including a first lip (102) having a generally planar base (140) extending from the first end of the strip (91) and a sealing part (142) for sealing against the closure member (109), the wall (98) further including a second lip (103) spaced from the first lip (102) and having a generally planar base (150) extending from approximately mid-way along the base (140) of the first lip (102) to a distal edge (84) of the second lip (103) and having a sealing part (152) for sealing against the closure member (109); and
a protruding formation (409,509,609) extending outward from the planar base (150) of the second lip (103) in a direction opposite the sealing part (152) of the second lip (103) and configured for insertion through an aperture (400) of the frame (8) and for interlocking engagement with the frame (8):
wherein the protruding formation (409,509,609) is disposed adjacent the distal edge (84) of the planar base (150) of the second lip (103) at a second free end of the strip (91) to secure the distal edge (84) of the second lip (103) and reduce the amount of movement of the second lip (103) caused by movement of the closure member (109).

2. The assembly claim 1, wherein the formation (409,509,609) comprises a protrusion with a resiliently deformable enlarged head portion.

3. The assembly of claim 1 or 2, wherein the formation (409,509,609) is formed from material which is harder than the flexible material forming other parts of the strip (91).

4. The assembly of claim 1,2 or 3, wherein the formation (409,509,609) has a rigid member embedded therein.

5. The assembly of claim 1,2,3 or 4, wherein the formation (409,509,609) is integrally formed with the strip (91).

6. The assembly of any one of claims 1 to 5, wherein the strips (91) include a channel (93) at the first end thereof for grippingly engaging a flange of the frame (8).

7. The assembly of any one of claims 1 to 6, wherein the strip (91) is formed of extruded material.

8. The assembly of any one of claims 1 to 7, wherein the strip (91) comprises EPDM and/or TPE.

9. The assembly of any one of claims 1 to 8, wherein the second, free end of the strip (91) has an embedded rigid member (202) therein for reducing the tendency of that end to bend.

10. The assembly of any one of claims 1 to 9, wherein the formation includes a stem (414,514,614) and at least one lip, the lip engaging the flange.

11. The assembly of any one of claims 1 to 10, wherein the strip (91) is biassed towards the flange.

12. The assembly of claim 11, wherein the biassing causes the formation (409,509,609) to automatically engage the flange.

## Patentansprüche

1. Eine Dichtungs- oder Führungsanordnung für einen Rahmen (8) definierend eine Öffnung (10) und zum Dichten gegen ein Verschlusselement (109), die Anordnung ist
**gekennzeichnet durch:**
ein Band (91) aus flexiblem Material, das ein erstes Ende und einen hakenförmigen Teil (120) aufweist, angeordnet an dem ersten Ende des Bands (91) und eingerichtet zum verbindenden Kontaktieren in eine Aussparung (132) des Rahmens (8);
eine Wand (98), welche sich von dem ersten Ende des Bands (91) erstreckt, und an einer Seite von dem Verschlusselement (109) angeordnet ist und welche beinhaltet eine erste Lippe (102), die eine im Wesentlichen ebene Grundfläche (140) aufweist, die sich von dem ersten Ende des Bands (91) erstreckt, und ein Dichtungsabschnitt (142) zum Dichten gegen das Verschlusselement (109), die Wand (98) beinhaltet weiter eine zweite Lippe (103) beabstandet von der ersten Lippe (102) und die eine im Wesentlichen ebene Grundfläche (150) aufweist, die sich von näherungsweise halbem Wege entlang der Grundfläche (140) der ersten Lippe (102) zu einer entfernten Kante (84) von der zweiten Lippe (103) erstreckt und einen Dichtungsabschnitt (152) zum Dichten gegen das Verschlusselement (109) aufweist; und
eine vorspringende Ausbildung (409, 509, 609), welche sich auswärts von der ebenen Grundfläche (150) der zweiten Lippe (103) in eine Richtung gegenüber des Dichtungsabschnitts (152) der zweiten Lippe (103) erstreckt und die eingerichtet ist zum Einführen **durch** einen Durchlass (400) von dem Rahmen (8) und zum verbindenden Kontaktieren mit dem Rahmen (8):
wobei die vorspringende Ausbildung (409, 509, 609) angeordnet ist benachbart zu der entfernten Kante (84) der ebenen Grundfläche (150) der zweiten Lippe (103) an einem zweiten freien Ende von dem Band (91), um das entfernte Ende (84) der zweiten Lippe (103) zu sichern und die Menge der Bewegung der zweiten Lippe (103) zu reduzieren, welche **durch** Bewegung des Verschlusselementes (109) verursacht wird.

2. Die Anordnung des Anspruchs 1, wobei die Ausbildung (409, 509, 609) einen Vorsprung mit einem nachgiebig verformbaren vergrößerten Kopfteil umfasst.

3. Die Anordnung von Anspruch 1 oder 2, wobei die Ausbildung (409, 509, 609) aus Material gebildet ist, welches härter als das flexible Material ist, das andere Abschnitte von dem Band (91) bildet.

4. Die Anordnung von Anspruch 1, 2 oder 3, wobei die Ausbildung (409, 509, 609) ein darin eingebettetes starres Element aufweist.

5. Die Anordnung von Anspruch 1, 2, 3 oder 4, wobei die Ausbildung (409, 509, 609) einstückig mit dem Band (91) gebildet ist.

6. Die Anordnung von einem der Ansprüche 1 bis 5, wobei die Bänder (91) einen Kanal (93) an dem ersten Ende davon zum greifenden Kontaktieren eines Flansches von dem Rahmen (8) beinhalten.

7. Die Anordnung von einem der Ansprüche 1 bis 6, wobei das Band (91) aus extrudiertem Material gebildet ist.

8. Die Anordnung von einem der Ansprüche 1 bis 7, wobei das Band (91) EPDM und/oder TPE umfasst.

9. Die Anordnung von einem der Ansprüche 1 bis 8, wobei das zweite, freie Ende des Bands (91) ein eingebettetes starres Element (202) darin aufweist, um die Tendenz von diesem Ende sich zu Biegen zu reduzieren.

10. Die Anordnung von einem der Ansprüche 1 bis 9, wobei die Ausbildung einen Schaft (414, 514, 614) und zumindest eine Lippe beinhaltet, die Lippe kontaktiert den Flansch.

11. Die Anordnung von einem der Ansprüche 1 bis 10, wobei das Band (91) zu dem Flansch hin vorgespannt ist.

12. Die Anordnung von Anspruch 11, wobei die Vorspannung verursacht, dass die Ausbildung (409, 509, 609) den Flansch automatisch kontaktiert.

## Revendications

1. Système d'étanchéification ou de guidage pour un cadre (8) définissant une ouverture (10) et pour appliquer de façon étanche contre un élément de fermeture (109), le système étant **caractérisé par**:
une bande (91) constituée d'une matière flexible, présentant une première extrémité et une partie en forme de crochet (120) disposée à la première extrémité de la bande (91) et configurée pour réaliser un engagement de verrouillage mutuel à l'intérieur d'un évidement (132) du cadre (8);
une paroi (98) qui s'étend à partir de la première extrémité de la bande (91) et qui est disposée sur un côté de l'élément de fermeture (109), et comprenant une première lèvre (102) présentant une base essentiellement plane (140) qui s'étend à partir de la première extrémité de la bande (91), et une partie d'étanchéité (142) à appliquer de façon étanche contre l'élément de fermeture (109), la paroi (98) comportant en outre une deuxième lèvre (103) espacée de la première lèvre (102) et présentant une base essentiellement plane (150) qui s'étend à partir d'approximativement la mi-distance le long de la base (140) de la première lèvre (102) jusqu'à un bord distal (84) de la deuxième lèvre (103), et comprenant une partie d'étanchéité (152) à appliquer contre l'élément de fermeture (109); et
une formation saillante (409, 509, 609) qui s'étend vers l'extérieur à partir de la base plane (150) de la deuxième lèvre (103) dans une direction opposée à la partie d'étanchéité (152) de la deuxième lèvre (103), et configurée de manière à être insérée à travers une ouverture (400) du cadre (8) et à réaliser un engagement de verrouillage mutuel avec le cadre (8)
dans lequel la formation saillante (409, 509, 609) est disposée à proximité du bord distal (84) de la base plane (150) de la deuxième lèvre (103) à une deuxième extrémité libre de la bande (91) afin de fixer le bord distal (84) de la deuxième lèvre (103) et de réduire la quantité de déplacement de la deuxième lèvre (103) qui est provoquée par le déplacement de l'élément de fermeture (109).

2. Système selon la revendication 1, dans lequel la formation (409, 509, 609) comprend une saillie présentant une partie de tête agrandie élastiquement déformable.

3. Système selon la revendication 1 ou 2, dans lequel la formation (409, 509, 609) est formée à partir d'une matière qui est plus dure que la matière flexible qui forme les autres parties de la bande (91).

4. Système selon la revendication 1, 2 ou 3, dans lequel la formation (409, 509, 609) comprend un élément rigide incorporé en elle.

5. Système selon la revendication 1, 2, 3 ou 4, dans lequel la formation (409, 509, 609) est intégralement formée avec la bande (91).

6. Système selon l'une quelconque des revendications 1 à 5, dans lequel les bandes (91) comprennent un canal (93) à la première extrémité de celles-ci pour engager par accrochage une bride du cadre (8).

7. Système selon l'une quelconque des revendications 1 à 6, dans lequel la bande (91) est constituée d'une matière extrudée.

8. Système selon l'une quelconque des revendications 1 à 7, dans lequel la bande (91) contient de l'EPDM et/ou du TPE.

9. Système selon l'une quelconque des revendications 1 à 8, dans lequel la deuxième extrémité libre de la bande (91) comprend un élément rigide incorporé (202) en elle pour réduire la tendance de cette extrémité à se plier.

10. Système selon l'une quelconque des revendications 1 à 9, dans lequel la formation comprend une tige (414, 514, 614) et au moins une lèvre, la lèvre engageant la bride.

11. Système selon l'une quelconque des revendications 1 à 10, dans lequel la bande (91) est poussée en direction de la bride.

12. Système selon la revendication 11, dans lequel la poussée entraîne la formation (409, 509, 609) à engager automatiquement la bride.
